# EUROPEAN PATENT SPECIFICATION

(11) **EP 3 048 739 B1**
(45) Date of publication and mention of the grant of the patent: **09.06.2021**
(21) Application number: 13895877.2
(22) Date of filing: 22.10.2013
(51) Int. Cl.: H04B 1/10

(54) **INTERFERENCE CANCELLATION METHOD AND APPARATUS**
INTERFERENZUNTERDRÜCKUNGSVERFAHREN UND -VORRICHTUNG
PROCÉDÉ ET APPAREIL DE SUPPRESSION D'INTERFÉRENCE

(43) Date of publication of application: 27.07.2016
(73) Proprietor: Huawei Technologies Co., Ltd., Longgang District Shenzhen, Guangdong 518129 (CN)
(72) Inventor: CHEN, Teyan, Shenzhen Guangdong 518129 (CN)
(74) Representative: Epping - Hermann - Fischer
(86) International application number: PCT/CN2013/085721
(87) International publication number: WO 2015/058361

(56) References cited:
- EP-A1- 1 724 946
- EP-A2- 1 841 084
- WO-A1-2006/068635
- CN-A- 103 338 172
- US-A1- 2010 135 439
- US-A1- 2012 147 790
- US-A1- 2012 201 153
- US-B1- 8 422 540

## Description

### TECHNICAL FIELD

The present invention relates to the field of communications, and more particularly, to a method and a device of canceling interference.

### BACKGROUND

In wireless communication systems such as a mobile cellular communication system, a wireless local area network (Wireless Local Area Network, WLAN) and a fixed wireless access (Fixed Wireless Access, FWA), communication nodes, such as a base station (Base Station, BS) or an access point (Access Point, AP), a relay station (Relay Station, RS) and a user equipment (User Equipment, UE) generally have capabilities of transmitting their own signals and receiving signals from other communication nodes. Since a wireless signal is attenuated very quickly in a wireless channel, compared to its transmitting signal, a signal from a communication peer has been very weak when arriving at the receiving end, for example, a power difference between a received signal and a transmitted signal of a communication node in a mobile cellular communication system reaches 80dB to 140dB or even larger, and therefore, in order to avoid self-interference produced by the transmitted signal of the same transceiver to the received signal, transmission and reception of the wireless signal is usually distinguished by different frequency bands or time periods. For example, in frequency division duplex (Frequency Division Duplex, FDD), different frequency bands spaced with a certain guard band are used for transmission and reception, while in time division duplex (Time Division Duplex, TDD), different time periods spaced with a certain guard period are used for transmission and reception, particularly, the guard band in the FDD system and the guard period in the TDD system are both to guarantee sufficient isolation between transmission and reception, and avoid interference caused by transmission to reception.

Different from the existing FDD or TDD technique, the wireless full-duplex technique can perform receiving and transmitting operations simultaneously on the same wireless channel, as such, the wireless full-duplex technique theoretically has a frequency spectrum efficiency double of the FDD or TDD technique. Obviously, the premise of achieving the wireless full-duplex is to avoid, reduce and cancel self-interference (Self-interference) produced by the transmitted signal of the same transceiver to the received signal as much as possible, so that the self-interference does not influence correct reception of the desired signals.

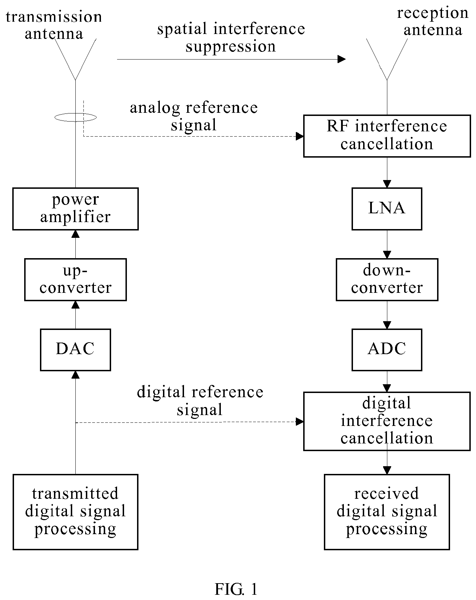

The existing wireless full-duplex system is mainly directed at canceling self-interference in a single input single output (Single Input Single Output, SISO) scenario. FIG. 1 is a block diagram showing principles of interference cancellation in the existing wireless full-duplex system. Particularly, a digital to analog converter (Digital to Analog Converter, DAC), an up-converter and an power amplifier in the transmitting channel, as well as a low noise amplifier (Low Noise Amplifier, LNA), a down-converter and an analog to digital converter (Analog to Digital Converter, ADC) in the receiving channel are functional modules of a radio frequency unit in the existing transceiver. The self-interference caused by the transmitting signal is canceled by units shown in the figure, such as spatial interference suppression, radio frequency front end analog interference cancellation and digital interference cancellation. In the existing wireless full-duplex system, the analog self-interference cancellation is mainly directed at canceling the self-interference main path. The digital interference cancellation is a supplement of the analog interference cancellation and to eliminate residual self-interference signals in the received digital signal from the baseband.

During a process of realizing the above interference cancellation scheme, the inventor(s) finds that the prior art at least has the following problems:
There is no full-duplex interference cancellation scheme directed at a multiple input multiple output (Multiple Input Multiple Output, MIMO) scenario in the prior art. In the MIMO scenario, the signals of respective transmission antennas are coupled to each received signal. After spatial isolation, the interference signals received by each reception antenna from other antennas have intensity less than that of the self-interference signals, but these interference signals still exceed the desired received signals, so that the desired signals cannot be received correctly. The current self-interference cancellation scheme directed at the SISO scenario is only to eliminate self-interference signals from a single transmission antenna, and thus cannot be used in the MIMO full-duplex system.

EP1724946 A1 describes an on-channel repeater which has a receiving antenna for receiving an RF signal and a transmitting antenna for transmitting on the same frequency as the input signal; an amplification path between the antennas provides substantially linear processing and includes a combiner, a decorrelating delay and a power amplifier; a filter estimator receives a reference signal and the combiner output and generates a plurality of control coefficients which are applied to an adaptive filter which filters the reference signal accordingly and applies its output to the combiner; the reference signal is derived not from the output of the decorrelating delay but rather from the output antenna after the power amplifier; where there is an adjacent transmitter generating potentially interfering signals, the transmitter output is coupled to the same transmitter antenna. US2010/135439 A1 describes a system and associated method for improved rejection of an interfering signal coupled from a transmission antenna into a local receive antenna in the presence of local multipath. WO2006/068635 A1 describes an adaptive filter suitable for fabrication on an RF integrated circuit and used for transmit leakage rejection in a wireless full-duplex communication system, which includes a summer and an adaptive estimator. US8422540 B1 discloses an intelligent backhaul radio, which can operate by zero division duplexing for use in PTP or PMP topologies, providing for significant spectrum usage benefits among other benefits. Specific system architectures and structures to enable active cancellation of multiple transmit signals at multiple receivers within a MIMO radio are disclosed. Further disclosed aspects include the adaptive optimization of cancellation parameters or coefficients.

### SUMMARY

The invention is defined by the features of the appended claims. Embodiments of the present invention provide a method and a device of canceling interference, for use in the MIMO full-duplex system, to solve the problem that it is difficult to apply the existing full-duplex system in the MIMO scenario.

To achieve the above object, embodiments of the present invention provide technical solutions as follows:
In a first aspect, there is provided a device of canceling interference, applied in a multiple input multiple output, MIMO, wireless full-duplex system, including:
a signal reconstructing unit, configured to reconstruct each of interference signals according to each of reference signals, and acquire a reconstructed interference signal according to the each of the interference signals, where the reference signals are acquired through multiple transmission antennas or multiple transmitters;
an interference cancellation unit, configured to acquire a residual signal according to the reconstructed interference signal and a received signal; and
a parameter updating unit, configured to update, according to the residual signal and the each of the reference signals, a parameter used for reconstructing the each of the interference signals;
where the signal reconstructing unit is specifically configured to acquire the each of the interference signals by means of making the each of the reference signals respectively pass through each of finite impulse response, FIR, filters corresponding to the each of the reference signals;
where the signal reconstructing unit further includes: a signal combining unit, configured to sum the each of the interference signals to obtain the reconstructed interference signal;
wherein the parameter updating unit is specifically configured to update a filter coefficient of the each of the FIR filters according to the residual signal and the each of the reference signals.

In a first possible implementation by combining the first aspect, the signal reconstructing unit includes a plurality of signal reconstructing subunits, each of the signal reconstructing subunits comprises a reference signal acquiring unit and a finite impulse response (Finite Impulse Response, FIR) filter unit;
each of the reference signal acquiring units are configured to acquire the each of the reference signals;
the reference signal acquiring unit includes a first converting unit and a digital baseband signal acquiring unit;
the first converting unit is configured to convert a radio frequency signal of a transmission antenna into a digital baseband signal, and take the digital baseband signal as the reference signal;
the digital baseband signal acquiring unit is configured to take a digital baseband signal of a transmitter as the reference signal.

In a second possible implementation by combining any of the first aspect to the third possible implementation of the first aspect, the interference cancellation unit is specifically configured to:
cancel the reconstructed interference signal with the received signal to obtain the residual signal.

In a third possible implementation by combining the fourth possible implementation of the first aspect, the interference cancellation unit includes:
a second converting unit, configured to convert the reconstructed interference signal from a digital baseband reconstructed interference signal into a radio frequency reconstructed interference signal, if the received signal is a received radio frequency signal;
a signal cancellation unit, configured to cancel the radio frequency reconstructed interference signal with the received radio frequency signal to obtain a radio frequency residual signal;
where, the first converting unit is configured to convert the radio frequency residual signal into a digital baseband residual signal to obtain the residual signal; or
the signal cancellation unit is configured to cancel the reconstructed interference signal with the received signal to obtain the residual signal, if the received signal is a received digital baseband signal.

In a fourth possible implementation by combining the fifth possible implementation of the first aspect, the first converting unit includes a down-converting unit, a low pass filter (Low Pass Filter, LPF) and an ADC;
the second converting unit comprises an up-converting unit, a low pass filter and a DAC.

In a second aspect, there is provided a method of canceling interference, applied in a multiple input multiple output, MIMO, wireless full-duplex system, including:
reconstructing each of interference signals according to each of reference signals, and acquiring a reconstructed interference signal according to the each of the interference signals, where the reference signals are acquired through multiple transmission antennas or multiple transmitters;
acquiring a residual signal according to the reconstructed interference signal and a received signal; and
updating, according to the residual signal and the each of the reference signals, a parameter used for reconstructing the each of the interference signals;
where the reconstructing each of interference signals according to each of reference signals, includes: acquiring the each of interference signals by means of making the each of the reference signals respectively pass through each of finite impulse response, FIR, filters corresponding to the each of the reference signals;
where the acquiring the reconstructed interference signal according to the each of the interference signals, includes: summing the each of the interference signals to obtain the reconstructed interference signal; wherein the updating, according to the residual signal and the each of the reference signals, the parameter used for reconstructing the each of the interference signals, includes: updating a filter coefficient of the each of FIR filters according to the residual signal and the each of the reference signals.

In a first possible implementation by combining the second aspect, before reconstructing each of interference signals according to each of reference signals, the method further includes:
acquiring the each of the reference signals;
the acquiring the each of the reference signals includes:
   converting radio frequency signals of each of transmission antennas into each of digital baseband signals, and taking the each of the digital baseband signals as the each of the reference signal; or
   taking digital baseband signals of each of transmitters as the each of the reference signals.

In a second possible implementation by combining any of the second aspect to the third possible implementation of the second aspect, the acquiring the residual signal according to the reconstructed interference signal and the received signal, includes:
canceling the reconstructed interference signal with the received signal to obtain the residual signal.

In a third possible implementation by combining the fourth possible implementation of the second aspect, the canceling the reconstructed interference signal with the received signal to obtain the residual signal, includes:
if the received signal is a received radio frequency signal,
converting the reconstructed interference signal from a digital baseband reconstructed interference signal into a radio frequency reconstructed interference signal;
canceling the radio frequency reconstructed interference signal with the received radio frequency signal to obtain a radio frequency residual signal;
converting the radio frequency residual signal into a digital baseband residual signal to obtain the residual signal; or
if the received signal is a received digital baseband signal,
canceling the reconstructed interference signal with the received signal to obtain the residual signal.

Embodiments of the present invention provide a method and a device of canceling interference, which provide an interference cancellation mechanism in an MIMO full-duplex system. Particularly, interference signals are reconstructed according to reference signals, to further acquire a reconstructed interference signal, thereafter, a residual signal is acquired according to the reconstructed interference signal and a received signal, and finally, a filter coefficient used for reconstructing the interference signals is updated according to the residual signal and the reference signals. Each filter coefficient is updated continuously by cyclically executing the above processes, so that the interference signal can be tracked and eliminated by means of adaptive filtering.

### BRIEF DESCRIPTION OF DRAWINGS

In order to illustrate the technical solutions in embodiments of the present invention or the prior art more clearly, accompanying drawings needed in the embodiments or the prior art are illustrated briefly as follows. Apparently, the accompanying drawings are merely some of embodiments of the invention, and persons skilled in the art can derive other drawings from them without creative efforts.
FIG. 1 is a block diagram showing processes of principles of interference suppression in a wireless full-duplex system according to the prior art.
FIG. 2 is a schematic flowchart of a method of canceling interference according to an embodiment of the present invention;
FIG. 3 is a schematic flowchart of another method of canceling interference according to an embodiment of the present invention;
FIG. 4 is a first schematic structural diagram of a device of canceling interference according to an embodiment of the present invention;
FIG. 5 is a second schematic structural diagram of a device of canceling interference according to an embodiment of the present invention;
FIG. 6 is a third schematic structural diagram of a device of canceling interference according to an embodiment of the present invention;
FIG. 7 is a fourth schematic structural diagram of a device of canceling interference according to an embodiment of the present invention;
FIG. 8 is a fifth schematic structural diagram of a device of canceling interference according to an embodiment of the present invention;
FIG. 9 is a sixth schematic structural diagram of a device of canceling interference according to an embodiment of the present invention;
FIG. 10 is a seventh schematic structural diagram of a device of canceling interference according to an embodiment of the present invention; and
FIG. 11 is an eighth schematic structural diagram of a device of canceling interference according to an embodiment of the present invention.

### DESCRIPTION OF EMBODIMENTS

The technical solutions in embodiments of the present invention are hereinafter described clearly and comprehensively with reference to the accompanying drawings in the embodiments of the present invention. Obviously, the embodiments described here are part of the embodiments of the invention and not all of the embodiments. All other embodiments obtained by persons skilled in the art on the basis of the embodiments of the present invention without any creative efforts should fall within the scope of the invention.

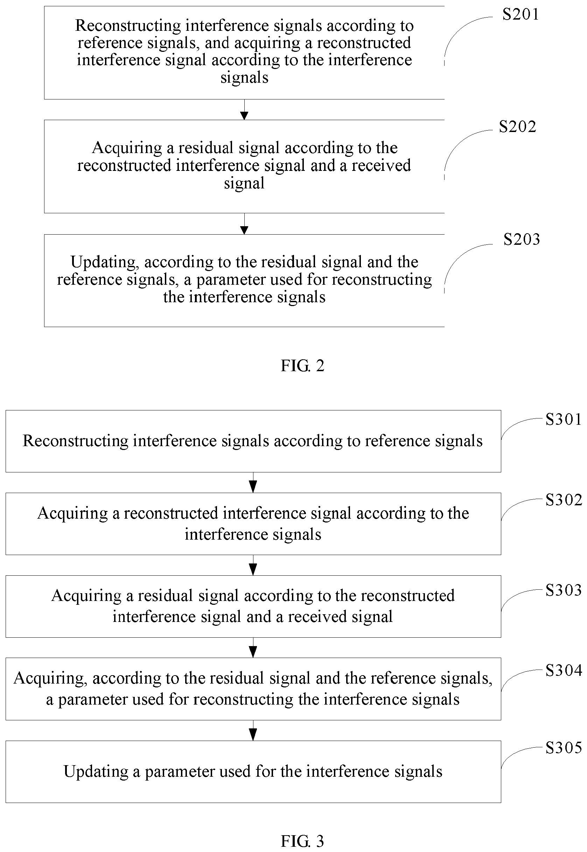

An embodiment of the present invention provides a method of canceling interference, as shown in FIG. 2, the method includes:
S201, Reconstructing interference signals according to reference signals, and acquiring a reconstructed interference signal according to the interference signals.
S202, Acquiring a residual signal according to the reconstructed interference signal and a received signal.
S203, Updating, according to the residual signal and the reference signals, a parameter used for reconstructing the interference signals.

Embodiments of the present invention provide a method of canceling interference, which provides an interference cancellation mechanism in an MIMO full-duplex system. Particularly, interference signals are reconstructed according to reference signals, to further acquire a reconstructed interference signal, thereafter, a residual signal is acquired according to the reconstructed interference signal and a received signal, and finally, a parameter used for reconstructing the interference signals is updated according to the residual signal and the reference signals. The parameters used for reconstructing the interference signals are updated continuously by cyclically executing the above processes, so that the interference signal can be tracked and eliminated by means of adaptive filtering.

In order to make persons skilled in the art understand technical solutions provided in embodiments of the present invention more clearly, another method of canceling interference provided in embodiments of the present invention will now be described in detail by means of the specific embodiments, as shown in FIG. 3, the method includes:
S301, Reconstructing interference signals according to reference signals.

Particularly, before reconstructing interference signals according to reference signals, the reference signals **x**₁, **x**₂,···,**x***_{N}* are acquired firstly;
Where, radio frequency signals of transmission antennas can be converted into digital baseband signals, and the digital baseband signals can be taken as the reference signals; or digital baseband signals of transmitters also can be taken as the reference signals, when it is guaranteed that each radio frequency circuit has sufficient linearity.

After the reference signals **x**₁,**x**₂,···,**x***_{N}* are acquired, the interference signals *y*₁,y₂,···,*y_{N}* are acquired by means of making the reference signals respectively pass through FIR filters corresponding to the reference signals.

Where, the filter coefficients currently adopted by the FIR filters respectively are **w**₁(*i*),**w**₂(*i*),···,**w***_{N}*(*i*).

S302, Acquiring a reconstructed interference signal according to the interference signals.

Particularly, the interference signals *y*₁,*y*₁*,*···,*y_{N}* can be summed to obtain the reconstructed interference signal *y_{ic}*.

S303, Acquiring a residual signal according to the reconstructed interference signal and a received signal.

Particularly, the reconstructed interference signal *y_{ic}* can be canceled with the received signal *y* to obtain the residual signal *e* = *y*-*y_{ic}*.

If the received signal *y* is a received radio frequency signal, the reconstructed interference signal *y_{ic}* is converted from a digital baseband reconstructed interference signal into a radio frequency reconstructed interference signal, and then canceled with the received radio frequency signal to obtain a radio frequency residual signal, then the radio frequency residual signal is converted into a digital baseband residual signal, which acts as the final residual signal *e*;
If the received signal *y* is a received digital baseband signal, then the reconstructed interference signal *y_{ic}* is directly canceled with the received signal *y,* to obtain the residual signal *e*.

S304, Acquiring, according to the residual signal and the reference signals, a parameter used for reconstructing the interference signals.

Particularly, updated coefficient values **w**₁(*i*+1),**w**₂(*i*+1),···,**w***_{N}*(*i*+1) corresponding to the FIR filters respectively are acquired according to the residual signal *e* and the reference signals **x**₁,**x**₂,···,**x***_{N}* ;
An adaptive filtering algorithm is adopted in the process of calculating coefficients of the FIR filters according to the residual signal *e* and the reference signals **x**₁,**x**₂,···,**x***_{N}*, and various adaptive filtering algorithms can be combined.

Illustratively, Table 1 below provides an adaptive algorithm applicable to an MIMO interference reconstruction filter:

**Table 1**

| Parameter: | Step parameter *µₘ* |
|---|---|
| Initialization: | Let **w***ₘ*(0)=0 |
| Coefficient update: | For *i* = 0,1,2,··· |
| | For *m*=0,1,2,···,*N*, calculate |
| | **w***ₘ*(*i*+1)=**w***ₘ*(*i*)+***µ**ₘ**x**ₘ*(*i*)*e^{∗}*(*i*) |

Particularly, the process of deducing this adaptive algorithm is illustrated. It is assumed that the received signal *y* is the interference signals coming from two transmission antennas and the desired signal coming from the communication peer: $y = {y}_{1} + {y}_{2} + s + n ,$

Since *y*₁ and *y*₂ are interference signals obtained by two transmitted signals passing through different channels, respectively, they can be considered as two independent uncorrelated signals. The reconstructed interference signal *y_{ic}* can be expressed as estimation of *y*₁ and *y*₂ : ${y}_{ic} = {\hat{y}}_{1} + {\hat{y}}_{2} = {{w}_{1}}^{H} {x}_{1} + {{w}_{2}}^{H} {x}_{2} ,$

Where, **w**₁ and **w**₂ are coefficients of two FIR filters, respectively. Mean squared error (Mean Squared Error, MSE) of the received signal *y* and the reconstructed interference signal *y_{ic}* can be obtained: $\begin{matrix}E \left\{{\left|e\right|}^{2}\right\} = E \left\{{\left|y-{y}_{ic}\right|}^{2}\right\} \\ = E \left\{{\left|y\right|}^{2}\right\} + E \left\{{\left|{y}_{ic}\right|}^{2}\right\} - E \left\{{y}^{∗}{y}_{ic}\right\} - E \left\{{{y}_{ic}}^{∗}y\right\} .\end{matrix}$

The first term in the expression (3) *E*{|*y*|²}=σ*_{d}*², is the variance of the received signal. Substitute the second term in the expression (3) by the expression (2), we get: $\begin{matrix}E \left\{{\left|\hat{y}\right|}^{2}\right\} = E \left\{{\left|{\hat{y}}_{1}\right|}^{2}\right\} + E \left\{{\left|{\hat{y}}_{2}\right|}^{2}\right\} + E \left\{{{\hat{y}}_{1}}^{∗}{\hat{y}}_{2}\right\} + E \left\{{{\hat{y}}_{2}}^{∗}{\hat{y}}_{1}\right\} \\ = {{w}_{1}}^{H} {R}_{1} {w}_{1} + {{w}_{2}}^{H} {R}_{2} {w}_{2} ,\end{matrix}$

Where, **R**₁ = **x**₁**x**₁**^{H}** and **R**₂ = **x**₂**x**₂**^{H}** are instantaneous estimations of correlation matrixes of the reference signals **x**₁ and **x**₂, respectively. Substitute the third term and the fourth term in the expression (3) by the expressions (1) and (2), we get respectively: $\begin{matrix}E \left\{{y}^{∗}{y}_{ic}\right\} = E \left\{{{y}_{1}}^{∗}{\hat{y}}_{1}\right\} + E \left\{{{y}_{2}}^{∗}{\hat{y}}_{2}\right\} \\ = {{w}_{1}}^{H} {β}_{1} + {{w}_{2}}^{H} {β}_{2} ,\end{matrix}$ $\begin{matrix}E \left\{{{y}_{ic}}^{∗}y\right\} = E \left\{{{\hat{y}}_{1}}^{∗}{y}_{1}\right\} + E \left\{{{\hat{y}}_{2}}^{∗}{y}_{2}\right\} \\ = {{β}_{1}}^{H} {w}_{1} + {{β}_{2}}^{H} {w}_{2} ,\end{matrix}$

Where, **β**₁ = *y*₁^{∗}**x**₁ and **β**₂ = *y*₂^{*}**x**₂ are instantaneous estimations of cross-correlation vectors of the received signal and the reference signal. By the above deduction, the expression (3) can be rewritten as: $E \left\{{\left|e\right|}^{2}\right\} = {{σ}_{d}}^{2} + \left({{w}_{1}}^{H}{R}_{1}{w}_{1}-{{w}_{1}}^{H}{β}_{1}-{{β}_{1}}^{H}{w}_{1}\right) + \left({{w}_{2}}^{H}{R}_{2}{w}_{2}-{{w}_{2}}^{H}{β}_{2}-{{β}_{2}}^{H}{w}_{2}\right) .$

The derivatives of each element in vectors **w**₁ and **w**₂ are taken by the expression (4) respectively, and gradient vectors are obtained respectively: $∇ {J}_{1} = - 2 {β}_{1} + 2 {R}_{1} {w}_{1} ,$ $∇ {J}_{2} = - 2 {β}_{2} + 2 {R}_{2} {w}_{2} .$

In accordance with the steepest descent method, we can obtain an updated expression of the filter coefficient vector **w**₁ : $\begin{matrix}{w}_{1} \left(i+1\right) = {w}_{1} \left(i\right) - \frac{1}{2} {μ}_{1} ∇ {J}_{1} \left(i\right) \\ = {w}_{1} \left(i\right) + μ \left[{β}_{1}\left(i\right)-{R}_{1}\left(i\right){w}_{1}\left(i\right)\right] \\ = {w}_{1} \left(i\right) + {μ}_{1} {x}_{1} \left(i\right) {\left[{y}_{1}\left(i\right)-{\hat{y}}_{1}\left(i\right)\right]}^{∗} \\ = {w}_{1} \left(i\right) + {μ}_{1} {x}_{1} \left(i\right) {\left[y\left(i\right)-{\hat{y}}_{2}\left(i\right)-{\hat{y}}_{1}\left(i\right)\right]}^{∗} \\ = {w}_{1} \left(i\right) + {μ}_{1} {x}_{1} \left(i\right) {e}^{∗} \left(i\right) ,\end{matrix}$

Likewise, we can obtain an updated expression of the filter coefficient vector **w**₂ : ${w}_{2} \left(i+1\right) = {w}_{2} \left(i\right) + {μ}_{2} {x}_{2} \left(i\right) {e}^{∗} \left(i\right) ,$

To sum up, an updated expression of a filter coefficient vector of this adaptive algorithm is: ${w}_{m} \left(i+1\right) = {w}_{m} \left(i\right) + {μ}_{m} {x}_{m} \left(i\right) {e}^{∗} \left(i\right)$

Particularly, the step parameter *µₘ* is a known quantity, which can be a default value set by the system, or can be given by an external input of the system, the subscript *m* is a sequence number of a filter in the system, *i* is an index sequence number of the current number of times of updates, **x***ₘ*(*i*) is a reference signal of the *m* -th filter input in the system after the *i*-th update, *e* (*i*) is a residual signal obtained after the *i*-th update of the system, **w***ₘ*(*i*) is a filter coefficient of the m -th filter in the system when the number of times of updates is *i*, **w***ₘ*(*i*+1) is a filter coefficient of the *m* -th filter in the system after the (*i*+1)-th update.

Illustratively, Table 2 below provides another adaptive algorithm applicable to an MIMO interference reconstruction filter:

**Table 2**

| Parameter: | Forgetting factor *λₘ* |
|---|---|
| Initialization: | Let **w***ₘ*(0)=0, **P***ₘ*(0)=*δₘ* ⁻¹**I** |
| Coefficient update: | For *i* = 0,1,2, ··· |
| | For *m*=0,1,2,···,*N,* calculate |
| | **α***ₘ*(*i*+1)=**P***ₘ*(*i*)**x***ₘ*(*i*+1), |
| | ${k}_{m} \left(i+1\right) = \frac{{α}_{m} \left(i+1\right)}{{λ}_{m} + {{x}_{m}}^{H} \left(i+1\right) {α}_{m} \left(i+1\right)} ,$ |
| | **P***ₘ* (*i* +1)= *λₘ* ⁻¹**P***ₘ* (*i*)-*λₘ*⁻¹**kₘ** (*i*+ 1)**x***ₘ*^{H} (*i*+ 1)**P***ₘ* (*i*) |
| | **w***ₘ*(*i*+1)=**w***ₘ*(*i*)+*e*^{∗}(*i*+1)**k***ₘ*(*i*+1) |

Particularly, the forgetting factor *λₘ* and the initial parameter *δₘ* in Table 2 are known quantities, which can be default values of the system, or can be given by an external input of the system, **I** is a diagonal matrix with all the elements on the diagonal being equal to 1.

Particularly, a group of coefficient update expresssions in Table 2 can be obtained with the recursive least-squares method in combination with the forgetting factor, where, the subscript ***m*** is a sequence number of a filter in the system, ***i*** is an index sequence number of the current number of times of updates, **x***ₘ*(*i*+1) is a reference signal of the ***m*** -th filter input in the system before the (*i*+1)-th update, ***e*** (*i*+1) is a residual signal obtained before the (*i*+1)-th update of the system, **w***ₘ*(*i*) is a filter coefficient of the *m* -th filter in the system when the number of times of updates is *i,* **w***ₘ*(*i*+1) is a filter coefficient of the *m* -th filter in the system after the (*i*+1)-th update. In case that **w***ₘ*(*i*)*, e* (*i*+1) and **x***ₘ*(*i*+1) are known, **w***ₘ*(*i*+1) can be obtained from the group of expressions, and then coefficients required for updating the filter can be obtained.

It should be noted that the above adaptive algorithms applicable to an MIMO interference reconstruction filter are only illustrative, although not exclusively, persons skilled in the art can deduce and calculate the coefficient required for updating the filter via different algorithms according to known parameters, such as a reference signal, a residual signal and the current filter coefficient.

S305, Updating the parameters used for the interference signals.

Particularly, by means of the adaptive filtering algorithm, updated coefficient values **w**₁(*i*+1),**w**₂(*i*+1),···, **w***_{N}*(*i*+1) corresponding to the FIR filters respectively are calculated according to the residual signal *e* and the reference signals **x**₁,**x**₂,···, **x***_{N}*, and sent to the FIR filters to substitute the current filter coefficients **w**₁(*i*),**w**₂(*i*),···,**w***_{N}*(*i*) of the FIR filters and complete the update. As such, the coefficients corresponding to the FIR filters can be updated continuously by repeatedly executing S301 to S305, so that variation of each interference channel can be tracked.

Embodiments of the present invention provide a method of canceling interference, which provides an interference cancellation mechanism in an MIMO full-duplex system. Particularly, interference signals are reconstructed according to reference signals, to further acquire a reconstructed interference signal, thereafter, a residual signal is acquired according to the reconstructed interference signal and a received signal, and finally, filter coefficients used for reconstructing the interference signals are updated according to the residual signal and the reference signals. Each filter coefficient is updated continuously by cyclically executing the above processes, so that the interference signal can be tracked and eliminated by means of adaptive filtering.

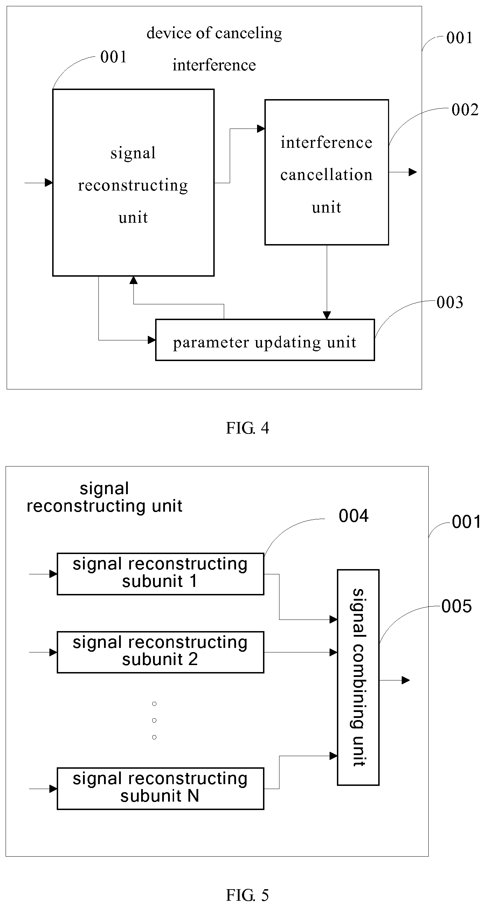

An embodiment of the present invention also provides a device 00 of canceling interference, as shown in FIG. 4, the device 00 of canceling interference includes:
a signal reconstructing unit 001, configured to reconstruct interference signals according to reference signals, and acquire a reconstructed interference signal according to the interference signals.

An interference cancellation unit 002, configured to acquire a residual signal according to the reconstructed interference signal and a received signal.

A parameter updating unit 003, configured to update, according to the residual signal and the reference signals, a parameter used for reconstructing the interference signals.

Optionally, as shown in FIG. 5, the signal reconstructing unit 001 can include:
a plurality of signal reconstructing subunits 004 and a signal combining unit 005, particulalry:
The plurality of signal reconstructing subunits 004 are configured to acquire the reference signals, and acquire the interference signals according to the reference signals; the signal combining unit 005 is configured to sum the interference signals to obtain the reconstructed interference signal.

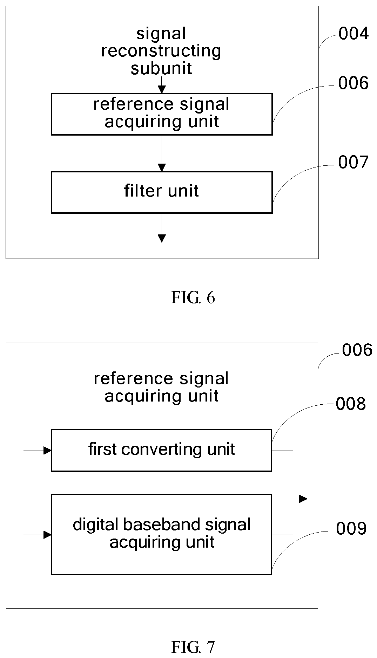

Optionally, as shown in FIG. 6, each signal reconstructing subunit 004 also can include:
a reference signal acquiring unit 006, configured to acquire each of the reference signals.

A filter unit 007, configured to acquire the interference signals by means of making the reference signals respectively pass through FIR filters corresponding to the reference signals.

Optionally, as shown in FIG. 7, the reference signal acquiring unit 006 also can include:
a first converting unit 008, configured to convert a radio frequency signal of the transmission antenna into a digital baseband signal, and output the digital baseband signal as the reference signal.

A digital baseband signal acquiring unit 009, configured to output a digital baseband signal of a transmitter as the reference signal.

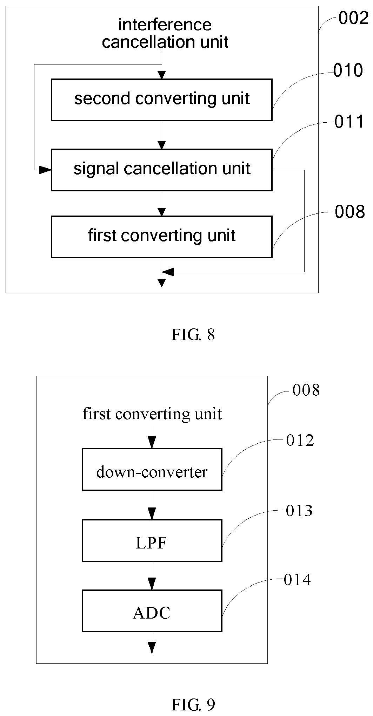

Optionally, as shown in FIG. 8, the interference cancellation unit 002 also can include:
a second converting unit 010, configured to convert the reconstructed interference signal from a digital baseband reconstructed interference signal into a radio frequency reconstructed interference signal, if the received signal is a received radio frequency signal.

A signal cancellation unit 011, configured to cancel the input radio frequency reconstructed interference signal with the received radio frequency signal to obtain a radio frequency residual signal, if the received signal is a received radio frequency signal; or directly cancel the input reconstructed interference signal with the received signal to obtain the residual signal, if the received signal is a received digital baseband signal.

The first converting unit 008 is further configured to convert the radio frequency residual signal into a digital baseband residual signal to obtain the residual signal.

Optionally, as shown in FIG. 9, the first converting unit 008 can include: a down-converter 012, an LPF 013 and an ADC 014.

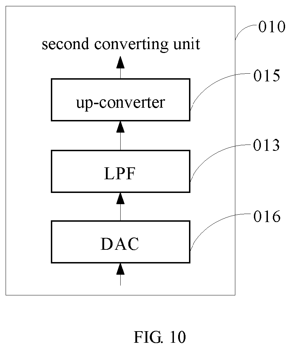

Optionally, as shown in FIG. 10, the second converting unit 010 includes: an up-converter 015, an LPF 013 and a DAC 016.

Optionally, the parameter updating unit 003 can specifically be configured to update filter coefficients of the FIR filters according to the residual signal and the reference signals.

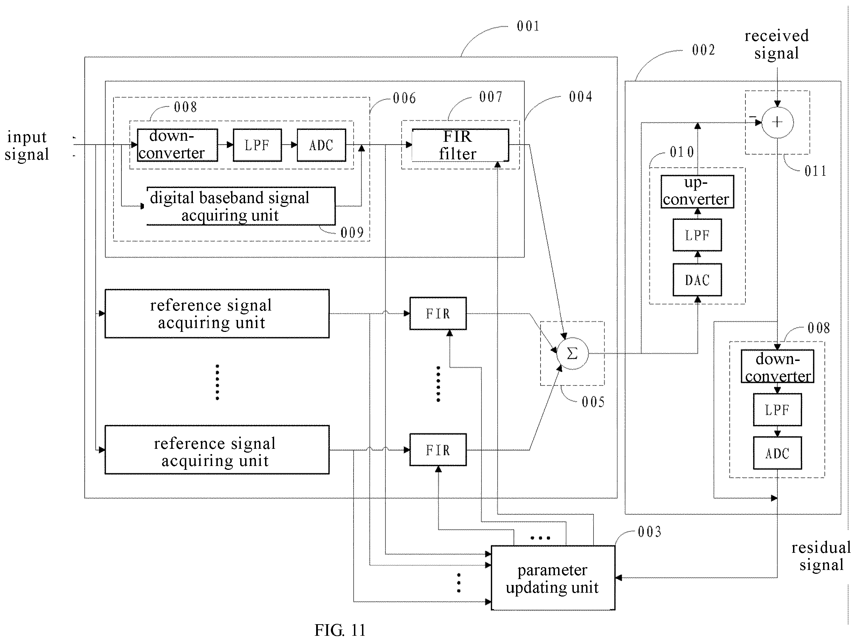

In summary, the structural diagram of the device 00 of canceling interference according to the embodiments of the present invention can be as shown in FIG. 11. The input signal of the device 00 of canceling interference is sent to each reference signal acquiring unit 006 in the signal reconstructing unit 001; input signals can be radio frequency signals of transmission antennas, the radio frequency signals are sent to respective first converting unit 008 to obtain the reference signals; or in the case of ensuring that each radio frequency circuit has sufficient linearity, the digital baseband signals of transmitters can be directly taken as the reference signals via the digital baseband signal acquiring unit 009. On one hand, the reference signal acquiring units 006 send the reference signals to the filter unit 007, obtain the interference signals by reconstruction, and send the interference signals to the signal combining unit 005 to sum the interference signals to obtain the reconstructed interference signal; on the other hand, send the reference signals to the parameter updating unit 003.

The signal reconstructing unit 001 sends the reconstructed interference signal to the interference cancellation unit 002; if the received signal of the interference cancellation unit 002 is a received radio frequency signal, then the reconstructed interference signal is sent to the second converting unit 010; the radio frequency reconstructed interference signal is obtained and sent to the signal cancellation unit 011 for canceling with the received radio frequency signal; a radio frequency residual signal is further obtained and sent to the first converting unit 008; the radio frequency residual signal is converted into a digital baseband residual signal and output as the residual signal, and meanwhile sent to the parameter updating unit 003. Alternatively, if the received signal of the interference cancellation unit 002 is a received digital baseband signal, then the reconstructed interference signal sent by the signal reconstructing unit 001 is canceled directly with the received signal of the interference cancellation unit 002 to obtain a residual signal output, and meanwhile sent to the parameter updating unit 003.

The reference signals and the residual signal are sent to the parameter updating unit 003, filter coefficients used by the filter units 007 in the signal reconstructing subunits 004 for reconstructing the interference signals are obtanined with the adaptive filtering algorithm, and the parameters are sent to the filter units 007 to update the filter coefficients.

Embodiments of the present invention provide a device of canceling interference, which provides an interference cancellation mechanism in an MIMO full-duplex system. Particularly, interference signals are reconstructed according to reference signals, to further acquire a reconstructed interference signal, thereafter, a residual signal is acquired according to the reconstructed interference signal and a received signal, and finally, filter coefficients used for reconstructing the interference signals are updated according to the residual signal and the reference signals. Each filter coefficient is updated continuously by cyclically executing the above processes, so that the interference signal can be tracked and eliminated by means of adaptive filtering.

Understandably, in the embodiments described herein, the disclosed devices and methods may be implemented in other modes. For example, the device embodiments above are merely illustrative, and the modules of the device are defined from the perspective of logical functions only and may be defined in a different way in practical application. Besides, the connection between modules illustrated or discussed herein may be implemented through interfaces, and may be electronic, mechanical, or in other forms.

The modules described can be physically separated or not, and can be physical units or not. Part or all of the modules of the device can be selected to achieve the purposes of the proposal of the embodiment according to the actual demand.

Besides, all functional modules in the embodiments of the present invention may be physically stand-alone, or integrated into a processing module, or two or more of the modules are integrated into one module. The integrated module above can be implemented in hardware, or a combination of hardware and software function modules.

The integrated module above implemented as a software function unit can be stored in a computer-readable storage medium. The software function module above is stored in a storage medium and incorporates several instructions causing a computer device (for example, personal computer, server, or network device) to execute part of the steps of the method according to each embodiment of the present invention. Examples of the storage medium include various media capable of storing program codes, such as a USB flash disk, a mobile hard disk, a read-only memory (Read-Only Memory ROM), a random access memory (Random Access Memory, RAM), a magnetic disk, or an optical disk.

The above descriptions are merely specific embodiments of the present invention, but not intended to limit the protection scope of the present invention. Any variation or replacement that can be easily derived by persons skilled in the art shall fall within the protection scope of the present invention. Therefore, the protection scope of the present invention is subject to the appended claims.

## Claims

1. A device of canceling interference, applied in a multiple input multiple output, MIMO, wireless full-duplex system, comprising:
a signal reconstructing unit (001), configured to reconstruct each of interference signals according to each of reference signals, and acquire a reconstructed interference signal according to the each of the interference signals, wherein the reference signals are acquired through multiple transmission antennas or multiple transmitters;
an interference cancellation unit (002), configured to acquire a residual signal according to the reconstructed interference signal and a received signal; and
a parameter updating unit (003), configured to update, according to the residual signal and the each of the reference signals, a parameter used for reconstructing the each of the interference signals;
wherein the signal reconstructing unit (001) is specifically configured to acquire the each of the interference signals by means of making the each of the reference signals respectively pass through each of finite impulse response, FIR, filters corresponding to the each of the reference signals;
wherein the signal reconstructing unit (001) further comprises: a signal combining unit (005), configured to sum the each of the interference signals to obtain the reconstructed interference signal;
wherein the parameter updating unit (003) is specifically configured to update a filter coefficient of the each of the FIR filters according to the residual signal and the each of the reference signals.

2. The device according to claim 1, wherein, the signal reconstructing unit (001) comprises a plurality of signal reconstructing subunits (004), each of the signal reconstructing subunits (004) comprises a reference signal acquiring unit (006) and an FIR filter unit (007);
each of the reference signal acquiring units (006) are configured to acquire the each of the reference signals;
the reference signal acquiring unit (006) comprises a first converting unit (008) and a digital baseband signal acquiring unit (009);
the first converting unit (008) is configured to convert a radio frequency signal of a transmission antenna into a digital baseband signal, and take the digital baseband signal as the reference signal;
the digital baseband signal acquiring unit (009) is configured to take a digital baseband signal of a transmitter as the reference signal.

3. The device according to claim 1 or claim 2, wherein the interference cancellation unit (002) is specifically configured to:
cancel the reconstructed interference signal with the received signal to obtain the residual signal.

4. The device according to claim 3, wherein the interference cancellation unit (002) comprises:
a second converting unit (010), configured to convert the reconstructed interference signal from a digital baseband reconstructed interference signal into a radio frequency reconstructed interference signal, if the received signal is a received radio frequency signal;
a signal cancellation unit (011), configured to cancel the radio frequency reconstructed interference signal with the received radio frequency signal to obtain a radio frequency residual signal;
wherein, the first converting unit (008) is configured to convert the radio frequency residual signal into a digital baseband residual signal to obtain the residual signal; or
the signal cancellation unit (011) is configured to cancel the reconstructed interference signal with the received signal to obtain the residual signal, if the received signal is a received digital baseband signal.

5. The device according to claim 4, wherein:
the first converting unit (008) comprises a down-converting unit (012), a low pass filter (013) and an analog-to-digital converter (014);
the second converting unit (010) comprises an up-converting unit (015), a low pass filter (013) and a digital-to-analog converter (016).

6. A method of canceling interference, applied in a multiple input multiple output, MIMO, wireless full-duplex system, comprising:
reconstructing (S201) each of interference signals according to each of reference signals, and acquiring a reconstructed interference signal according to the each of the interference signals, wherein the reference signals are acquired through multiple transmission antennas or multiple transmitters;
acquiring (S202) a residual signal according to the reconstructed interference signal and a received signal; and
updating (S203), according to the residual signal and the each of the reference signals, a parameter used for reconstructing the each of the interference signals;
wherein the reconstructing (S201) each of interference signals according to each of reference signals, comprises: acquiring the each of interference signals by means of making the each of the reference signals respectively pass through each of finite impulse response, FIR, filters corresponding to the each of the reference signals;
wherein the acquiring the reconstructed interference signal according to the each of the interference signals, comprises: summing the each of the interference signals to obtain the reconstructed interference signal;
wherein the updating (S203), according to the residual signal and the each of the reference signals, the parameter used for reconstructing the each of the interference signals, comprises: updating a filter coefficient of the each of FIR filters according to the residual signal and the each of the reference signals.

7. The method according to claim 6, wherein before reconstructing (S201) each of interference signals according to each of reference signals, the method further comprises:
acquiring the each of the reference signals;
the acquiring the each of the reference signals comprises:
converting radio frequency signals of each of transmission antennas into each of digital baseband signals, and taking the each of the digital baseband signals as the each of the reference signal; or
taking digital baseband signals of each of transmitters as the each of the reference signals.

8. The method according to claim 6 or claim 7, wherein the acquiring (S202) the residual signal according to the reconstructed interference signal and the received signal, comprises:
canceling the reconstructed interference signal with the received signal to obtain the residual signal.

9. The method according to claim 8, wherein the canceling the reconstructed interference signal with the received signal to obtain the residual signal, comprises:
if the received signal is a received radio frequency signal,
converting the reconstructed interference signal from a digital baseband reconstructed interference signal into a radio frequency reconstructed interference signal;
canceling the radio frequency reconstructed interference signal with the received radio frequency signal to obtain a radio frequency residual signal;
converting the radio frequency residual signal into a digital baseband residual signal to obtain the residual signal; or
if the received signal is a received digital baseband signal,
canceling the reconstructed interference signal with the received signal to obtain the residual signal.

## Patentansprüche

1. Vorrichtung zum Aufheben von Interferenz, angewandt in einem drahtlosen "Multiple-Input-Multiple Output"-, MIMO-,Vollduplexsystem, umfassend:
eine Signalrekonstruktionseinheit (001), die dazu konfiguriert ist, jedes von Interferenzsignalen gemäß jedem von Referenzsignalen zu rekonstruieren und ein rekonstruiertes Interferenzsignal gemäß jedem der Interferenzsignale zu erfassen,
wobei die Referenzsignale durch mehrere Übertragungsantennen oder mehrere Sender erfasst werden,
eine Interferenzaufhebungseinheit (002), die dazu konfiguriert ist, ein Restsignal gemäß dem rekonstruierten Interferenzsignal und einem Empfangssignal zu erfassen, und
eine Parameteraktualisierungseinheit (003), die dazu konfiguriert ist, gemäß dem Restsignal und jedem der Referenzsignale einen Parameter zu aktualisieren, der zum Rekonstruieren jedes der Interferenzsignale verwendet wird,
wobei die Signalrekonstruktionseinheit (001) spezifisch dazu konfiguriert ist, jedes der Interferenzsignale zu erfassen, indem sie jedes der Referenzsignale jeweils durch jeden von Filtern mit endlicher Impulsantwort, FIR-Filter, leitet, die jedem der Referenzsignale entsprechen,
wobei die Signalrekonstruktionseinheit (001) ferner umfasst: eine Signalkombinierungseinheit (005), die dazu konfiguriert ist, jedes der Interferenzsignale zu summieren, um das rekonstruierte Interferenzsignal zu gewinnen,
wobei die Parameteraktualisierungseinheit (003) spezifisch dazu konfiguriert ist, einen Filterkoeffizienten für jedes der FIR-Filter gemäß dem Restsignal und jedem der Referenzsignale zu aktualisieren.

2. Vorrichtung nach Anspruch 1, wobei die Signalrekonstruktionseinheit (001) eine Vielzahl von Signalrekonstruktions-Teileinheiten (004) umfasst, wobei jede der Signalrekonstruktions-Teileinheiten (004) eine Referenzsignal-Erfassungseinheit (006) und eine FIR-Filtereinheit (007) umfasst,
jede der Referenzsignal-Erfassungseinheiten (006) dazu konfiguriert ist, jedes der Referenzsignale zu erfassen,
die Referenzsignal-Erfassungseinheit (006) eine erste Umwandlungseinheit (008) und eine Erfassungseinheit für das digitale Basisbandsignal (009) umfasst,
die erste Umwandlungseinheit (008) dazu konfiguriert ist, ein Hochfrequenzsignal einer Übertragungsantenne in ein digitales Basisbandsignal umzuwandeln und das digitale Basisbandsignal als das Referenzsignal zu nehmen,
die Erfassungseinheit für das digitale Basisbandsignal (009) dazu konfiguriert ist, ein digitales Basisbandsignal eines Senders als das Referenzsignal zu nehmen.

3. Vorrichtung nach Anspruch 1 oder Anspruch 2, wobei die Interferenzaufhebungseinheit (002) spezifisch für Folgendes konfiguriert ist:
Aufheben des rekonstruierten Interferenzsignals durch das Empfangssignal, um das Restsignal zu gewinnen.

4. Vorrichtung nach Anspruch 3, wobei die Interferenzaufhebungseinheit (002) Folgendes umfasst:
eine zweite Umwandlungseinheit (010), die dazu konfiguriert ist, das rekonstruierte Interferenzsignal von einem rekonstruierten digitalen Basisband-Interferenzsignal in ein rekonstruiertes Hochfrequenz-Interferenzsignal umzuwandeln, wenn das Empfangssignal ein Hochfrequenz-Empfangssignal ist,
eine Signalaufhebungseinheit (011), die dazu konfiguriert ist, das rekonstruierte Hochfrequenz-Interferenzsignal durch das Hochfrequenz-Empfangssignal aufzuheben, um ein Hochfrequenz-Restsignal zu gewinnen,
wobei die erste Umwandlungseinheit (008) dazu konfiguriert ist, das Hochfrequenz-Restsignal in ein digitales Basisband-Restsignal umzuwandeln, um das Restsignal zu gewinnen, oder
wobei die Signalaufhebungseinheit (011) dazu konfiguriert ist, das rekonstruierte Interferenzsignal durch das Empfangssignal aufzuheben, um das Restsignal zu gewinnen, wenn das Empfangssignal ein digitales Basisband-Empfangssignal ist.

5. Vorrichtung nach Anspruch 4, wobei:
die erste Umwandlungseinheit (008) eine Abwärtswandlungseinheit (012), ein Tiefpassfilter (013) und einen Analog-Digital-Wandler (014) umfasst,
die zweite Umwandlungseinheit (010) eine Aufwärtswandlungseinheit (015), ein Tiefpassfilter (013) und einen Digital-Analog-Wandler (016) umfasst.

6. Verfahren zum Aufheben von Interferenz, angewandt in einem drahtlosen "Multiple-Input-Multiple-Output"-, MIMO-,Vollduplexsystem, umfassend:
Rekonstruieren (S201) jedes von Interferenzsignalen gemäß jedem von Referenzsignalen und Erfassen eines rekonstruierten Interferenzsignals gemäß jedem der Interferenzsignale, wobei die Referenzsignale durch mehrere Übertragungsantennen oder mehrere Sender erfasst werden,
Erfassen (S202) eines Restsignals gemäß dem rekonstruierten Interferenzsignal und einem Empfangssignal, und
Aktualisieren (S203) eines Parameters, der zum Rekonstruieren jedes der Interferenzsignale verwendet wird, gemäß dem Restsignal und jedem der Referenzsignale,
wobei das Rekonstruieren (S201) jedes von Interferenzsignalen gemäß jedem von Referenzsignalen Folgendes umfasst: Erfassen jedes von Interferenzsignalen, indem jedes der Referenzsignale jeweils durch jeden von Filtern mit endlicher Impulsantwort, FIR-Filter, geleitet wird, entsprechend jedem der Referenzsignale,
wobei das Erfassen des rekonstruierten Interferenzsignals gemäß jedem der Interferenzsignale, Folgendes umfasst: Summieren jedes der Interferenzsignale, um das rekonstruierte Interferenzsignal zu gewinnen,
wobei das Aktualisieren (S203) des Parameters, der zum Rekonstruieren jedes der Interferenzsignale verwendet wird, gemäß dem Restsignal und jedem der Referenzsignale Folgendes umfasst: Aktualisieren eines Filterkoeffizienten jedes der FIR-Filter gemäß dem Restsignal und jedem der Referenzsignale.

7. Verfahren nach Anspruch 6, wobei das Verfahren vor dem Rekonstruieren (S201) jedes von Interferenzsignalen gemäß jedem von Referenzsignalen ferner Folgendes umfasst:
Erfassen jedes der Referenzsignale,
wobei das Erfassen jedes der Referenzsignale Folgendes umfasst:
Umwandeln von Hochfrequenzsignalen jeder von Übertragungsantennen in jedes von digitalen Basisbandsignalen und Nehmen jedes der digitalen Basisbandsignale als jedes der Referenzsignale, oder
Nehmen von digitalen Basisbandsignalen von jedem von Sendern als jedes der Referenzsignale.

8. Verfahren nach Anspruch 6 oder Anspruch 7, wobei das Erfassen (S202) des Restsignals gemäß dem rekonstruierten Interferenzsignal und dem Empfangssignal Folgendes umfasst:
Aufheben des rekonstruierten Interferenzsignals durch das Empfangssignal, um das Restsignal zu erhalten.

9. Verfahren nach Anspruch 8, wobei das Aufheben des rekonstruierten Interferenzsignals durch das Empfangssignal, um das Restsignal zu erhalten, Folgendes umfasst:
wenn das Empfangssignal ein Hochfrequenz-Empfangssignal ist,
Umwandeln des rekonstruierten Interferenzsignals von einem rekonstruierten digitalen Basisband-Interferenzsignal in ein rekonstruiertes Hochfrequenz-Interferenz signal,
Aufheben des rekonstruierten Hochfrequenz-Interferenzsignals durch das Hochfrequenz-Empfangssignal, um ein Hochfrequenz-Restsignal zu gewinnen,
Umwandeln des Hochfrequenz-Restsignals in ein digitales Basisband-Restsignal, um das Restsignal zu gewinnen, oder
wenn das Empfangssignal ein digitales Basisband-Empfangssignal ist,
Aufheben des rekonstruierten Interferenzsignals durch das Empfangssignal, um das Restsignal zu gewinnen.

## Revendications

1. Dispositif de suppression d'interférence, appliqué dans un système de duplex intégral sans fil à entrées multiples et sorties multiples, MIMO, comprenant :
une unité de reconstruction de signal (001), configurée pour reconstruire chaque signal de signaux d'interférence en fonction de chaque signal de signaux de référence, et acquérir un signal d'interférence reconstruit en fonction de chacun des signaux d'interférence, les signaux de référence étant acquis au moyen d'antennes de transmission multiples ou de transmetteurs multiples ;
une unité de suppression d'interférence (002), configurée pour acquérir un signal résiduel en fonction du signal d'interférence reconstruit et d'un signal reçu ; et
une unité de mise à jour de paramètre (003), configurée pour mettre à jour, en fonction du signal résiduel et de chacun des signaux de référence, un paramètre utilisé pour reconstruire chacun des signaux d'interférence ;
dans lequel l'unité de reconstruction de signal (001) est spécifiquement configurée pour acquérir chacun des signaux d'interférence en faisant passer respectivement chacun des signaux de référence par chaque filtre de filtres à réponse impulsionnelle finie, FIR, correspondant à chacun des signaux de référence ;
dans lequel l'unité de reconstruction de signal (001) comprend également : une unité de combinaison de signaux (005), configurée pour additionner chacun des signaux d'interférence pour obtenir le signal d'interférence reconstruit ;
dans lequel l'unité de mise à jour de paramètre (003) est spécifiquement configurée pour mettre à jour un coefficient de filtre de chacun des filtres FIR en fonction du signal résiduel et de chacun des signaux de référence.

2. Dispositif selon la revendication 1, dans lequel l'unité de reconstruction de signal (001) comprend une pluralité de sous-unités de reconstruction de signal (004), et chacune des sous-unités de reconstruction de signal (004) comprend une unité d'acquisition de signal de référence (006) et une unité de filtre FIR (007) ;
chacune des unités d'acquisition de signal de référence (006) est configurée pour acquérir chacun des signaux de référence ;
l'unité d'acquisition de signal de référence (006) comprend une première unité de conversion (008) et une unité d'acquisition de signal en bande de base numérique (009) ;
la première unité de conversion (008) est configurée pour convertir un signal de radiofréquence d'une antenne de transmission en un signal en bande de base numérique, et prendre le signal en bande de base numérique comme signal de référence ;
l'unité d'acquisition de signal en bande de base numérique (009) est configurée pour prendre un signal en bande de base numérique d'un transmetteur comme signal de référence.

3. Dispositif selon la revendication 1 ou la revendication 2, dans lequel l'unité de suppression d'interférence (002) est spécifiquement configurée pour :
supprimer le signal d'interférence reconstruit avec le signal reçu pour obtenir le signal résiduel.

4. Dispositif selon la revendication 3, dans lequel l'unité de suppression d'interférence (002) comprend :
une deuxième unité de conversion (010), configurée pour convertir le signal d'interférence reconstruit en passant d'un signal d'interférence reconstruit en bande de base numérique à un signal d'interférence reconstruit de radiofréquence, si le signal reçu est un signal de radiofréquence reçu ;
une unité de suppression de signal (011), configurée pour supprimer le signal d'interférence reconstruit de radiofréquence avec le signal de radiofréquence reçu pour obtenir un signal résiduel de radiofréquence ;
dans lequel la première unité de conversion (008) est configurée pour convertir le signal résiduel de radiofréquence en un signal résiduel en bande de base numérique pour obtenir le signal résiduel ; ou
l'unité de suppression de signal (011) est configurée pour supprimer le signal d'interférence reconstruit avec le signal reçu pour obtenir le signal résiduel, si le signal reçu est un signal en bande de base numérique reçu.

5. Dispositif selon la revendication 4, dans lequel :
la première unité de conversion (008) comprend une unité de conversion descendante (012), un filtre passe-bas (013) et un convertisseur analogique/numérique (014) ;
la deuxième unité de conversion (010) comprend une unité de conversion ascendante (015), un filtre passe-bas (013) et un convertisseur numérique/analogique (016).

6. Procédé de suppression d'interférence, appliqué dans un système de duplex intégral sans fil à entrées multiples et sorties multiples, MIMO, comprenant les étapes consistant à :
reconstruire (S201) chaque signal de signaux d'interférence en fonction de chaque signal de signaux de référence, et acquérir un signal d'interférence reconstruit en fonction de chacun des signaux d'interférence, les signaux de référence étant acquis au moyen d'antennes de transmission multiples ou de transmetteurs multiples ;
acquérir (S202) un signal résiduel en fonction du signal d'interférence reconstruit et d'un signal reçu ; et
mettre à jour (S203), en fonction du signal résiduel et de chacun des signaux de référence, un paramètre utilisé pour reconstruire chacun des signaux d'interférence ;
dans lequel la reconstruction (S201) de chacun des signaux d'interférence en fonction de chacun des signaux de référence comprend l'étape consistant à : acquérir chacun des signaux d'interférence en faisant passer respectivement chacun des signaux de référence par chaque filtre de filtres à réponse impulsionnelle finie, FIR, correspondant à chacun des signaux de référence ;
dans lequel l'acquisition du signal d'interférence reconstruit en fonction de chacun des signaux d'interférence comprend l'étape consistant à : additionner chacun des signaux d'interférence pour obtenir le signal d'interférence reconstruit ;
dans lequel la mise à jour (S203), en fonction du signal résiduel et de chacun des signaux de référence, du paramètre utilisé pour reconstruire chacun des signaux d'interférence comprend l'étape consistant à : mettre à jour un coefficient de filtre de chacun des filtres FIR en fonction du signal résiduel et de chacun des signaux de référence.

7. Procédé selon la revendication 6, le procédé, avant la reconstruction (S201) de chaque signal de signaux d'interférence en fonction de chaque signal de signaux de référence, comprenant également l'étape consistant à :
acquérir chacun des signaux de référence ;
l'acquisition de chacun des signaux de référence comprenant les étapes consistant à :
convertir des signaux de radiofréquence de chacune des antennes de transmission en chaque signal de signaux en bande de base numériques, et prendre chaque signal des signaux en bande de base numérique comme chaque signal des signaux de référence ; ou
prendre les signaux en bande de base numériques de chacun des transmetteurs comme chacun des signaux de référence.

8. Procédé selon la revendication 6 ou la revendication 7, dans lequel l'acquisition (S202) du signal résiduel en fonction du signal d'interférence reconstruit et du signal reçu comprend l'étape consistant à :
supprimer le signal d'interférence reconstruit avec le signal reçu pour obtenir le signal résiduel.

9. Procédé selon la revendication 8, dans lequel la suppression du signal d'interférence reconstruit avec le signal reçu pour obtenir le signal résiduel comprend l'étape consistant à :
si le signal reçu est un signal de radiofréquence reçu,
convertir le signal d'interférence reconstruit en passant d'un signal d'interférence reconstruit en bande de base numérique à un signal d'interférence reconstruit de radiofréquence ;
supprimer le signal d'interférence reconstruit de radiofréquence avec le signal de radiofréquence reçu pour obtenir un signal résiduel de radiofréquence ;
convertir le signal résiduel de radiofréquence en un signal résiduel en bande de base numérique pour obtenir le signal résiduel ; ou
si le signal reçu est un signal en bande de base numérique reçu,
supprimer le signal d'interférence reconstruit avec le signal reçu pour obtenir le signal résiduel.
